# EUROPÄISCHE PATENTSCHRIFT

(11) **EP 0 427 989 B1**
(45) Veröffentlichungstag und Bekanntmachung des Hinweises auf die Patenterteilung: **21.09.1994**
(21) Anmeldenummer: 90120531.0
(22) Anmeldetag: 26.10.1990
(51) Int. Cl.: F16L 55/00, F16L 1/06

(54) **Verfahren zum Verschliessen und Freigeben einer Rohrleitung**
Process for closing and opening a pipe
Procédé pour obturer et ouvrir un tuyau

(30) Priorität: 13.11.1989 DE 3937690
(43) Veröffentlichungstag der Anmeldung: 22.05.1991
(73) Patentinhaber: Friatec Aktiengesellschaft Keramik- und Kunststoffwerke, D-68229 Mannheim (DE)
(72) Erfinder: Scholl, Reinhold, W-6800 Mannheim 41 (DE)
(74) Vertreter: Klose, Hans, Dipl.-Phys.

(56) Entgegenhaltungen:
- EP-A- 0 294 727
- DE-A- 3 723 898
- GB-A- 1 009 779
- US-A- 2 351 642
- US-A- 4 257 628

## Beschreibung

Die Erfindung bezieht sich auf ein Verfahren zum Verschließen und Freigeben einer Rohrleitung.

Aus der EP 294 727 A1 ist eine Anordnung bekannt, über welche in die Rohrleitung mittels eines Blasensetzgerätes eine Sperrblase eingebracht werden kann. Hierzu wird vor Ort der Stutzen stumpf und im wesentlichen senkrecht an die bereits verlegte Rohrleitung angeschweißt. Die Herstellung der Schweißverbindung erfordert eine große Sorgfalt des Montagepersonals. Die Überprüfung der Dichtigkeit und Festigkeit der genannten Schweißverbindung kann unter den üblichen Montagebedingungen in der Praxis nur schwerlich mit der erforderlichen Sicherheit durchgeführt werden. Falls das in der Rohrleitung unter Druck anstehende Medium brennbar ist, wobei insbesondere auf Erdgas verwiesen sei, ergeben sich zusätzliche Schwierigkeiten im Hinblick auf die strengen Sicherheitsvorschriften. Nach dem Anschweißen des Stutzens wird die Rohrleitung mittels eines Bohrers aufgebohrt, welcher durch den Stutzen eingeführt wird, wobei geeignete Maßnahmen zur Abdichtung des Stutzens gegenüber der Umgebung zu treffen sind. Mit der vorbekannten Anordnung kann zwar nachträglich ein Abzweig an einer beliebigen Stelle der Rohrleitung vorgesehen werden, doch kann das Ende der Rohrleitung mit dieser Anordnung nicht ohne weiteres dauerhaft abgeschlossen werden.

Ferner ist aus der DE 37 23 898 A1 eine als Anbohrarmatur oder als Sperrblasenarmatur ausgebildete Anordnung bekannt, deren Stutzen mit einem ersten Sattelstück verbunden ist. Dieses Sattelstück weist in seiner Innenfläche eine elektrische Schweißwicklung auf und es wird bei der Montage auf der Außenfläche der Rohrleitung aufgelegt und unter Zuhilfenahme eines zweiten Sattelstückes sowie geeigneter Schrauben festgelegt. Nachfolgend wird elektrischer Strom durch die Schweißwicklung geleitet, um eine dichte Verschweißung des Sattelstückes sowie des Stutzens mit der Rohrleitung zu erhalten. Im Vergleich mit der eingangs erläuterten Stumpfschweißverbindung des Stutzens unmittelbar auf der Rohraußenfläche kann mit einer derartigen durch Elektroschweißen hergestellten Schweißverbindung den bestehenden Sicherheitsanforderungen entsprochen werden. Gleichwohl ist der Montageaufwand nicht unerheblich und hohe Anforderungen an die sorgfältige Durchführung sind unerläßlich. Mit einer derartigen Anbohrarmatur kann ein Abzweig an einer beliebigen Stelle der Rohrleitung vorgesehen werden, doch eignet sich diese Anordnung nicht zum Abschließen des Endes der Rohrleitung.

Der Erfindung liegt daher die Aufgabe zugrunde, ein Verfahren zu entwickeln, bei dem einerseits die Rohrleitung vorläufig an ihrem Ende abgeschlossen und andererseits bei Bedarf eine Weiterführung der Rohrleitung mit geringem Aufwand vorgenommen werden kann, wobei für die verschiedenen Einsatzmöglichkeiten die Sicherheitsanforderungen erfüllt werden müssen.

Die Lösung dieser Aufgabe erfolgt gemäß den im Patentanspruch 1 angegebenen Merkmalen.

Die im erfindungsgemäßen Verfahren eingesetzte Anordnung ist als ein kompaktes Formstück ausgebildet, welches am Ende einer Rohrleitung angeordnet wird. Der Rohrkörper des Formstückes ist an einem Ende derart ausgestaltet, daß eine Verbindung mit der Rohrleitung zuverlässig und funktionssicher hergestellt werden kann. Die Ausbildung dieses Rohrendes für eine Muffenverbindung mit der Rohrleitung ermöglicht problemlos eine feste und dichte Verbindung. Das Formstück ist ein vorgefertigtes Bauteil, welches werksseitig entsprechenden Qualitätskontrollen und Sicherheitsprüfungen unterzogen werden kann und insofern einteilig ausgebildet ist. Das Formstück wird werksseitig vorgefertigt, wobei nach zunächst getrennter Herstellung von Stutzen und Rohrkörper diese zu dem einteiligen Formstück konfektioniert werden oder aber in einem gemeinsamen Arbeitsgang, beispielsweise durch Spritzgießen, gefertigt werden. Unabhängig von der jeweiligen Herstellungsart ist ein einteiliges Formstück geschaffen, welches vor Ort über das eine Ende des Rohrkörpers mit der Rohrleitung, insbesondere mittels einer Muffenverbindung und/oder durch Elektroschweißen, funktionssicher und dicht verbindbar ist. Bedarfsweise kann anstelle der Muffenverbindung bzw. der Elektroschweißverbindung mit einem Heizelement auch eine Stumpfschweißverbindung zwischen dem einen Ende des Rohrkörpers sowie der Rohrleitung vorgesehen werden. Desweiteren kann die Verbindung auch mittels einer Doppelmuffe vorgesehen werden, in welcher das eine Ende des Rohrkörpers sowie das Ende der Rohrleitung eingeschoben werden, wobei insbesondere durch Elektroschweißen über diese Doppelmuffe die Verbindung erfolgt. Schließlich kann auch das Rohrleitungsende die Elektroschweißmuffe aufweisen, in welche das eine Ende des Rohrkörpers zur Verbindung einschiebbar ist.

Die Anordnung wird nicht auf die Außenfläche der Rohrleitung im Nachhinein aufgesetzt und mit dieser in geeigneter Weise verbunden, sondern sie ist ein Endstück, welches vorzugsweise mittels einer Muffenverbindung mit der Rohrleitung fest und zuverlässig abdichtend verbunden wird. An dem im wesentlichen zylindrischen Rohrkörper ist einstückig und bevorzugt im wesentlichen quer zur Längsachse des Rohrkörpers der genannte Stutzen angeordnet. An dem einen axialen Ende ist zweckmäßig vorzugsweise die Elektroschweißmuffe zur Verbindung mit der Rohrleitung vorgesehen und am anderen Ende ist der Rohrkörper mit einem Boden dicht abgeschlossen. Dieser Boden ist insbesondere einteilig mit dem Rohrkörper, ebenso wie der Stutzen, als integraler Bestandteil desselben ausgebildet. Der Stutzen enthält einen Stopfen, über welchen eine Entlüftung der Rohrleitung bedarfsweise vorgenommen werden kann. Ist die Anordnung zunächst an dem einen Ende einer Rohrleitung angeordnet, so ermöglicht sie risikofrei die Entlüftung der Rohrleitung. Soll diese Rohrleitung zu einem späteren Zeitpunkt weitergeführt werden, so kann dies in einfacher Weise dadurch erfolgen, daß der erwähnte Boden vom Rohrkörper vom anderen Ende des Rohrkörpers entfernt wird und dort weiterführende Rohrleitungsteile angeordnet werden.

Der Stutzen kann ferner mittels einer Kappe dicht abgeschlossen werden, wobei diese Kappe ihrerseits bei Bedarf abgenommen werden kann. Die Kappe weist zweckmäßig ein Innengewinde auf, über welches die Verschraubung mit einem Außengewinde des Stutzens erfolgt. Soll die Rohrleitung, welche zunächst in einem ersten Bauabschnitt mittels der als Endstück dienenden Anordnung abgeschlossen war, weitergeführt werden, so kann über den Stutzen eine Blasensetzarmatur zum Absperren der Rohrleitung in gewohnter Weise angeordnet werden. Nachfolgend wird der Boden, insbesondere durch Abschneiden vom Rohrkörper, getrennt, so daß dann problemlos die Weiterführung der Rohrleitung vorgenommen werden kann. Ist die Weiterführung der Rohrleitung durchgeführt, so wird das Blasensetzgerät entfernt, der Stopfen gesetzt, die Rohrleitung freigegeben und der Stutzen verschweißt und/oder mit einer Verschlußkappe dicht verschlossen. Diese Verschlußkappe weist im Gegensatz zu der oben erwähnten separaten Kappe zweckmäßig eine Schweißwicklung auf, mittels welcher eine funktionssichere, dichte sowie dauerhafte Verschweißung mit dem Stutzen vorgenommen wird. Die Anordnung erfüllt somit drei wesentliche Funktionen, nämlich:
1. vorläufiges Beenden einer Rohrleitung (erster Bauabschnitt)
2. Entlüften der Rohrleitung
3. schließlich die funktionssichere und problemlose Weiterführung der Rohrleitung (zweiter Bauabschnitt).

Im Gegensatz zu herkömmlichen Verfahren wird einerseits eine wesentliche Vereinfachung der Handhabung und andererseits aber auch eine erhebliche Verbesserung der Funktionssicherheit durch den integral an den Rohrkörper angeformten Stutzen gewährleistet. Der Stutzen weist eine bis zum Innenraum der Rohrleitung durchgehende Bohrung auf und die Rohrleitung muß folglich auch nicht angebohrt werden, um mit einem Blasensetzgerät die Rohrleitung absperren zu können.

In den Unteransprüchen und in der nachfolgenden Beschreibung eines Ausführungsbeispiels sind zweckmäßige Weiterbildungen und Ausgestaltungen des erfindungsgemäßen Verfahrens angegeben.

Die Erfindung wird nachfolgend anhand des in der Zeichnung dargestellten Ausführungsbeispiels näher erläutert. Es zeigen:
- Fig. 1: einen Schnitt durch die Anordnung in einer Axialebene,
- Fig. 2: einen Schnitt durch die Anordnung in einer Radialebene, wobei der Stutzen mittels einer Kappe abgeschlossen ist,
- Fig. 3: den Stutzen in einem Schnitt und teilweise in einer Ansicht mit der Verschlußkappe.

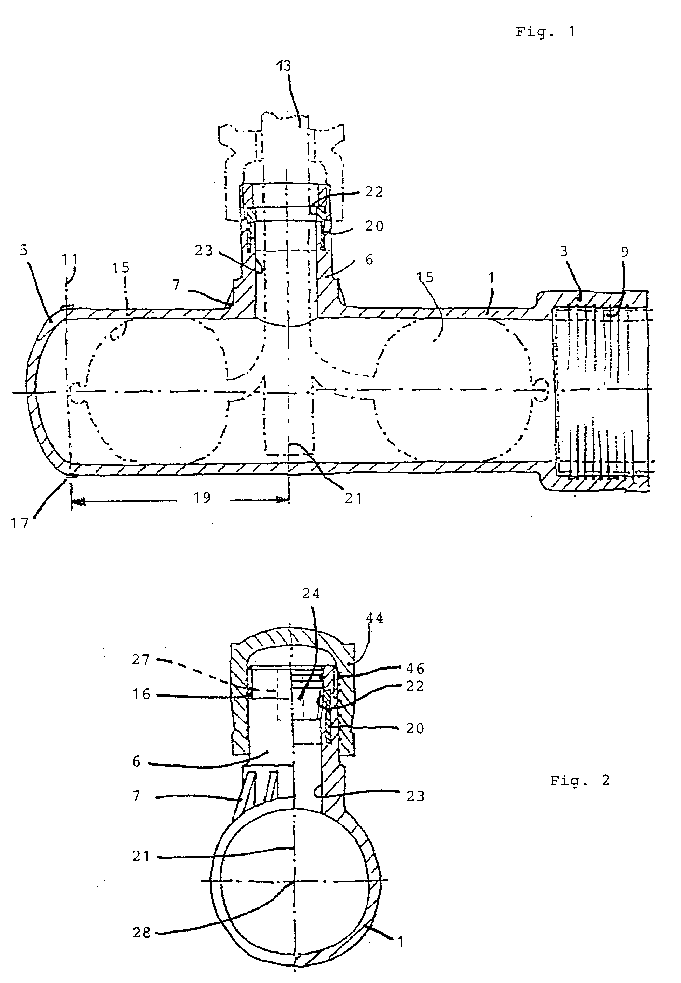

Fig. 1 zeigt in einem axialen Längsschnitt die Anordnung, welche einen im wesentlichen zylindrischen Rohrkörper 1 aufweist, der am einen Ende eine Muffe 3 und am anderen Ende einen Boden 5 aufweist. Seitlich des Rohrkörpers 1 ist ein Rohrstutzen 6 angeordnet, welcher einen definierten Innendurchmesser und ebenso einen definierten Außendurchmesser aufweist. Der Stutzen 6 und der Rohrkörper 1 sind einteilig ausgebildet, wobei im Übergangsbereich zur Verstärkung und Aussteifung Stützrippen 7 außen vorgesehen sind. Der Rohrkörper 1 und der Stutzen 6 bilden ein vorgefertigtes einteiliges Formstück. Dieses einteilige Formstück kann einerseits durch zunächst getrennte Herstellung von Stutzen und Rohrkörper und nachfolgender Konfektionierung derselben und andererseits in einem gemeinsamen Arbeitsgang, insbesondere durch Spritzgießen, hergestellt sein. Unabhängig von der jeweiligen Herstellungsart wird dieses einstückige vorgefertigte Bauteil vor Ort mit der Rohrleitung verbunden. Nicht nur der Stutzen 6 sondern auch die Muffe 3 und der Boden 5 sind mit dem Rohrkörper 1 integrale Bestandteile, die sämtlich in einem Arbeitsgang, insbesondere durch Spritzgießen oder Spritzpressen hergestellt werden. Die Muffe 3 ist zweckmäßig als Elektro-Schweißmuffe mit einer innenliegenden Schweißwicklung 9 ausgebildet, um den Anschluß an eine Rohrleitung in gewohnter Weise herstellen zu können. Solange der Boden 5 vorhanden ist, dient die Anordnung als Endstück der genannten Rohrleitung. Wie durch die strichpunktierte Linie 11 angedeutet, kann der Boden 5 durch einen Trennschnitt entfernt werden, um weitere Rohrteile anzuschließen und die vorhandene Rohrleitung in einem weiteren Bauabschnitt zu verlängern. Zwar hat sich die integrale Anformung des Bodens 5 an den Rohrkörper 1 als besonders zweckmäßig erwiesen, doch können im Rahmen dieser Erfindung stattdessen auch, insbesondere über Gewindeverbindungen, Kappen und/oder Stopfen vorgesehen sein.

Bevor der Boden 5 vom Rohrkörper 1 entfernt wird, wird die Rohrleitung mittels eines strichpunktiert dargestellten Blasensetzgerätes und den dargestellten Zweifach-Blasen 15 vorläufig abgesperrt. Anstelle der dargestellten Zweifach-Blase 15 können eine Einfach-Blase oder eine Doppel-Blase im Rohrkörper 1 hinter der Schweißmuffe 3 angeordnet werden. Damit beim Abtrennen des Bodens 5 die im Inneren des Rohrkörpers 1 befindliche Blase nicht beschädigt wird, ist an der Außenfläche des Rohrkörpers 1 in zweckmäßiger Weise eine Markierung 17 angeordnet. Die Markierung 17 weist zur Achse 21 des Stutzens 6 einen vorgegebenen Abstand 19 auf. Unter Berücksichtigung der max. Erstreckung der Blasen, die mit den zum Einsatz gelangenden Blasensetzgeräten in den Rohrkörper eingebracht werden, wobei zweckmäßig Toleranzen und Sicherheitszuschläge berücksichtigt werden, wird mit der derart beabstandet angeordneten Markierung 17 ein sicheres Abtrennen des Bodens 5 gewährleistet.

Fig. 2 zeigt teilweise in einer Ansicht und teilweise geschnitten die Anordnung, deren Stutzen 6 mit einer Verschlußkappe 44 abgeschlossen ist. Am oberen Ende weist der Stutzen 6 ein Außengewinde zur Befestigung des erwähnten Blasensetzgerätes auf. Die Innenfläche 23 des Stutzens 6 geht frei durch bis zu dem Innenraum des Rohrkörpers 1. In den Stutzen ist ein Gewindeeinsatz 20 integriert, welcher ein Innengewinde 22 aufweist. In dieses Innengewinde 22 ist ein Stopfen 24 mit seinem Außengewinde 26 im wesentlichen senkrecht zur Längsachse 28 des Rohrkörpers 1 eingeschraubt. Der Stopfen enthält eine hier nur schematisch angedeutete Bohrung oder dergleichen, in welcher insbesondere ein Entlüftungsventil eingeschraubt ist. Wird die Anordnung als Endstück einer Rohrleitung vorgesehen, so kann durch das Entlüftungsventil des Stopfens 24 bei der Inbetriebnahme der Rohrleitung diese entlüftet werden. Gegebenenfalls kann in die Bohrung 27 auch eine entsprechende Entlüftungsvorrichtung, insbesondere mit einem Ventil, eingeschraubt und nachträglich wieder entfernt werden, wobei dann die Bohrung 27 ihrerseits mit einem kleinen Stopfen abgedichtet wird. Insbesondere bei vergleichsweise kleinen Rohrdurchmessern kann es darüber hinaus genügen zum Entlüften den Stopfen 24 zumindest teilweise herauszuschrauben und nach Abschluß der Entlüftungsmaßnahmen wieder fest in das Innengewinde 22 des Gewindeeinsatzes 20 einzuschrauben. Wesentlich ist für alle Ausführungsformen, daß der untere, dem Rohrkörper 1 zugekehrte Teil des Stopfens an die Innenfläche 23 angepreßt und/oder mit dem Gewinde in die Innenfläche 23 eingeschraubt wird, um so eine zusätzliche Abdichtung zu erhalten. Nachfolgend wird eine, hier nicht dargestellte Kappe auf das Außengewinde 16 des Stutzens 6 aufgeschraubt.

Mit der erfindungsgemäßen Anordnung wird damit ein erster Bauabschnitt einer Rohrleitung beendet und sie dient als Endstück, das eine Entlüftung der Rohrleitung mit nachfolgend zuverlässigem Abdichten ermöglicht. Soll zu einem späteren Zeitpunkt die Rohrleitung weitergeführt werden, so kann nach Abnahme der genannten Kappe das Blasensetzgerät an dem Stutzen 6 angeschlossen werden. Mittels den genannten Sperrblasen wird die unter Druck stehende Rohrleitung vorläufig abgesperrt, der Boden vom Rohrkörper 1 abgetrennt und die Rohrleitung in der erforderlichen Weise weitergeführt. Es versteht sich, daß das neue Ende der weitergeführten Rohrleitung gleichfalls mit einer erfindungsgemäßen Anordnung abgeschlossen werden kann. Nach der Demontage des Blasensetzgerätes, wobei wiederum der Stopfen 24 eingeschraubt wird, wird die Verschlußkappe 44 mit dem Stutzen 6 verschweißt. Diese Verschlußkappe 44 ist ein anderes Bauteil als die oben er wähnte Kappe, welche mit ihrem Innengewinde auf das insbesondere für das Blasensetzgerät vorgesehene Außengewinde des Stutzens 6 aufschraubbar ist. Die Verschlußkappe 44 weist hierfür auf ihrer Innenfläche eine Schweißwicklung 46 auf, welche in gewohnter Weise mit einem Schweißstrom beaufschlagt werden kann. Nach dem Verschweißen ist ein zuverlässiger und den hohen Sicherheitsanforderungen entsprechender Abschluß hergestellt. Es sind hierbei drei Dicht-und Sicherheitsbereiche vorhanden:
1. Dichtbereich zwischen Stopfenaußengewinde und Innenfläche des Stutzens 6.
2. Dichtring 32 zwischen Stopfen und Innenfläche des Stutzens 6.
3. Schweißzone zwischen Verschlußkappe 44 und Außenfläche des Stutzens 6.

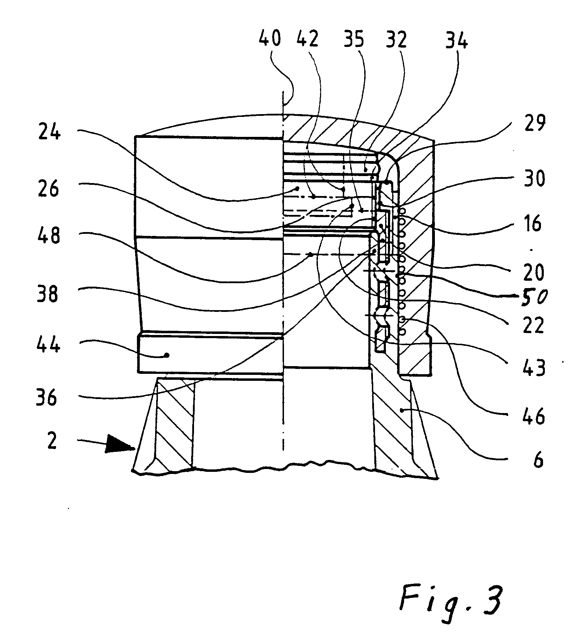

In Fig. 3 ist der Stutzen 6 mit aufgesetzter Verschlußkappe 44 teilweise in einer Ansicht und teilweise in einem Schnitt dargestellt, wobei der Stopfen 24 noch nicht vollständig eingeschraubt ist. Zwischen dem Gewindeeinsatz 20 und einer freien Stirnkante 29 des Stutzens 6 ist eine Dichtfläche 30 vorhanden, an welcher beim weiteren Eindrehen des Stopfens 24 dessen Dichtring 32 anliegt. Der Dichtring 32 liegt in einer Ringnut am hier oberen, freien Ende des Stopfens 24. Zwischen dem Dichtring 32 und dem Außengewinde 26 des Stopfens 24 ist ein Ringbund 34 vorhanden, der als Anschlag dient und nach dem vollständigen Einschrauben des Stopfens an einer Anschlagfläche 35 des aus Metall bestehenden Gewindeeinsatzes 20 anliegt. Aufgrund dieses Anschlages und der Anschlagfläche 35, die bevorzugt die Stirnfläche des Gewindeeinsatzes 20 ist, wird zuverlässig die Einschraubtiefe begrenzt und vor allem eine Beschädigung des Dichtringes verhindert, der beim Einschrauben an der zylindrischen Dichtfläche 30 entlang bewegt wird. Die zylindrische Dichtfläche 30 weist zweckmäßig einen um einen vorgegebenen Abstand größeren Radius auf als der Kopfkreis des Außengewindes 16 des Stopfens 24, um so zuverlässig eine Beschädigung beim Einschrauben des Stopfens zu verhindern.

Alternativ kann der Dichtring entsprechend in der vorstehend erläuterten Dichtfläche des Stutzens 6 angeordnet sein und anstelle der vorstehend erläuterten Ringnut kann der Stopfen eine zylindrische Dichtfläche aufweisen. Bei dieser Ausgestaltung weist zweckmäßig der Dichtring einen um einem vorgegebenen Abstand größeren Innendurchmesser auf als der Kopfkreisdurchmesser des Außengewindes 16 des Stopfens 24, damit beim Einschrauben des Stopfens 24 eine Beschädigung vermieden wird.

In Richtung zur Rohrlängsachse 28 hin schließt an das Innengewinde 22 des Gewindeeinsatzes 20 ein zusätzlicher Dichtbereich 36 an. Der Innendurchmesser dieses Dichtbereiches 36 ist zweckmäßig kleiner als der Fußkreisdurchmesser des Außengewindes 26 des Stopfens 24. Wird der Stopfen 24 aus der in der Zeichnung dargestellten Position noch weiter in den Stutzen 6 eingeschraubt, so schneidet das genannte Außengewinde in den Dichtbereich 36 ein bzw. wird in diesen eingepreßt. Hierdurch erfolgt zusätzlich zu der Abdichtung mittels des Dichtringes 32 eine weitere funktionssichere Abdichtung. Der ringförmige Dichtbereich 36 ist integraler Bestandteil des Stutzens 6 und besteht aus dem gleichen Werkstoff bzw. Kunststoff wie dieser. Der zylindrische Dichtbereich 36 wird radial außen von einem Ansatz 38 umgeben, welcher Bestandteil des Gewindeeinsatzes 20 ist und an dessen Innengewinde 22 in Richtung zur Längsachse 28 hin anschließt. Wie ersichtlich, weist der Ansatz 38 einen größeren mittleren Durchmesser auf als der Gewindeeinsatz 20. Die Länge des Außengewindes 26 des Stopfens 24 in Richtung der Stutzenachse 40 ist, wie dargestellt, wesentlich größer als die axiale Länge des Innengewindes 22. Gemäß den strichpunktierten Linien 42 enthält der Stopfen 24 an seiner Innenseite eine als Innenvierkant ausgebildete Ausnehmung, in welche zum Einschrauben ein entsprechendes Werkzeug eingesetzt werden kann, dessen Halteelement in die Ringnut einschnappt. Da beim Einschrauben der im Gewindeeinsatz 20 eine axiale Ausrichtung und Führung des Stopfens in einfacher Weise ermöglicht, werden zusätzliche Maßnahmen beim Einschrauben entbehrlich und eine funktionssichere Anlage und Abdichtung des eingeschraubten Stopfens wird sichergestellt.

Mit einer verschweißbaren Verschlußkappe 44 erfolgt eine weitere Abdichtung und Sicherung nach dem Einschrauben des Stopfens 24. Die Verschlußkappe 44 besteht aus einem schweißbaren Kunststoff, zweckmäßig aus dem gleichen wie die Armatur 2 und enthält innen eine Schweißwicklung 46. Mit der Linie 48 ist das innere Ende des Außengewindes 16 des Stutzens 6 angedeutet. In Richtung zur Rohrlängsachse 28 hin schließt an das Außengewinde 16 ein zylindrischer Schweißbereich 50, über welchen nach dem Einschalten des Schweißstromes eine feste und dichte Verbindung zwischen dem Stutzen und der Verschlußkappe 44 erfolgt. Wie ersichtlich, reicht die Schweißwicklung 46 auch über das Außengewinde 16, wodurch in zweckmäßiger Weise die Schweißfläche vergrößert und damit die Abdichtung verbessert werden, ohne hierdurch die Länge der Verschlußkappe 44 oder gar des Stutzens 6 in Richtung der Achse 40 vergrößern zu müssen.

### Bezugszeichen

- 1: Rohrkörper
- 3: Muffe
- 5: Boden
- 6: Stutzen
- 7: Stützrippe
- 9: Schweißwicklung
- 11: Linie
- 13: Blasensetzgerät
- 15: Zweifach-Blase
- 16: Außengewinde
- 17: Markierung
- 19: Abstand
- 20: Gewindeeinsatz
- 21: Achse
- 22: Innengewinde
- 23: Innenfläche
- 24: Stopfen
- 26: Außengewinde von 24
- 27: Bohrung
- 28: Längsachse
- 29: Stirnkante
- 30: Dichtfläche
- 32: Dichtring
- 34: Ringbund
- 35: Anschlagfläche
- 36: Dichtbereich
- 38: Ansatz
- 40: Achse von 6
- 42: Linie
- 43: Ringnut
- 44: Verschlußkappe
- 46: Schweißwicklung
- 48: Linie
- 50: Schweißbereich

## Patentansprüche

1. Verfahren zum Verschließen und Freigeben einer Rohrleitung mit einer Anordnung, enthaltend einen Rohrkörper (1), welcher mit einem ersten Ende mit der Rohrleitung verbindbar ist, sowie einen Stutzen (6), welcher mit dem Rohrkörper (1) als einteiliges unc vorgefertigtes Bauteil ausgebildet ist und eine mit dem Innerer des Rohrkörpers (1) in Verbindung stehende Innenfläche (23) aufweist,
bei dem die Anordnung in einem ersten Bauabschnitt als Endstück der Rohrleitung verwendet wird, wobei das andere Ende des aus Kunststoff bestehenden Rohrkörpers (1) mit einem Boden (5) verschlossen ist und wobei der gleichfalls aus Kunststoff bestehende Stutzen (6), insbesondere mittels eines Stopfens (24), verschlossen ist,
bei dem für einen weiteren Bauabschnitt der Stutzen (6) mit einer Blasensetzarmatur verbunden wird und mit dieser die Rohrleitung abgesperrt wird, wobei nachfolgend der Boden (5) vom Rohrkörper (1) entfernt wird,
und bei dem nach dem Anschluß weiterer Rohrleitungsteile am anderen Ende des Rohrkörpers (1) die Anordnung zur Weiterführung der Rohrleitung über das genannte andere Ende hinaus verwendet wird, wobei der Stutzen (6) wiederum verschlossen ist.

2. Verfahren nach Anspruch 1, dadurch gekennzeichnet, daß der Rohrkörper (1) an seinem ersten Ende eine Muffe (3) aufweist, welche insbesondere als Elektroschweißmuffe ausgebildet ist und im Inneren eine Schweißwicklung (9) aufweist.

3. Verfahren nach Anspruch 1 oder 2, dadurch gekennzeichnet, daß der Boden (5) bis zu seinem Abtrennen vom Rohrkörper (1) integraler Bestandteil desselben ist.

4. Verfahren nach Anspruch 3, dadurch gekennzeichnet, daß der Rohrkörper (1) an seiner Außenfläche eine Markierung (17) aufweist, entlang welcher der Boden (5) abtrennbar ist.

5. Verfahren nach einem der Ansprüche 1 bis 4, dadurch gekennzeichnet, daß in dem Stutzen (6) ein Gewindeeinsatz (20) mit einem Innengewinde (22) für den Stopfen (24) drehfest und dicht angeordnet ist, wobei der Gewindeeinsatz (20) bevorzugt aus Metall besteht.

6. Verfahren nach einem der Ansprüche 1 bis 5, dadurch gekennzeichnet, daß der Stutzen (6) ein Außengewinde (16) aufweist, welches bevorzugt am oberen Ende des Stutzens (6) angeordnet ist.

7. Verfahren nach einem der Ansprüche 1 bis 6, dadurch gekennzeichnet, daß im übergangsbereich zwischen dem Rohrkörper (1) und dem Stutzen (6) zur Aussteifung Rippen (7) angeordnet sind.

8. Verfahren nach einem der Ansprüche 5 bis 7, dadurch gekennzeichnet, daß an das Innengewinde (22) des Gewindeeinsatzes (20) in Richtung zur Längsachse (28) des Rohrkörpers (1) an einen Dichtbereich (36) anschließt, in welchen das vordere Ende des Stopfens (24) beim Einschrauben eingepreßt wird und/oder mit seinem Gewinde (26) einschneidet.

9. Verfahren nach Anspruch 8, dadurch gekennzeichnet, daß der Gewindeeinsatz (20) eine Anschlagfläche (35) für den Anschlag des Stopfens (24) aufweist.

10. Verfahren nach einem der Ansprüche 5 bis 9, dadurch gekennzeichnet, daß der Stutzen (6) zwischen seiner freien Stirnkante (29) und dem Gewindeeinsatz (20) eine Dichtfläche (30) für einen in einer Ringnut des Stopfens (24) angeordneten Dichtring (32) aufweist.

11. Verfahren nach einem der Ansprüche 5 bis 9, dadurch gekennzeichnet, daß im Stutzen (6) zwischen dessen freier Stirnkante (29) und dem Gewindeeinsatz (20) in einer Ringnut ein Dichtring anogeordnet ist, wobei der Stopfen (24) zu seinem freien Ende hin eine Dichtfläche aufweist.

## Claims

1. Process for closing and opening a pipe with a device having a tubular body (1) which can be joined via a first end to the pipe, and a socket (6) which is designed as a prefabricated component made in one piece with the tubular body (1) and has an inner face (23) in communication with the interior of the tubular body (1), in which the device is used in a first stage as an end section of the pipe, the other end of the tubular body (1) consisting of plastic being closed by a head (5) and the socket (6) also consisting of plastic being closed, in particular by means of a plug (24), in which, for a further stage, the socket (6) is connected to a balloon fitting device and the pipe is plugged by the latter, the head (5) subsequently being removed from the tubular body (1), and in which, after the connection of further pipe components to the other end of the tubular body (1), the device is used to extend the pipe beyond the said other end, the socket (6) being closed once again.

2. Process according to claim 1, characterised in that the tubular body (1) has a sleeve (3) at its first end which is in the form in particular of an electric welded sleeve and has a welding coil (9) in its interior.

3. Process according to claim 1 or claim 2, characterised in that the head (5) is an integral component of the tubular body (1) until it is separated therefrom.

4. Process according to claim 3, characterised in that the tubular body (1) has a mark (17) on its outer face along which the head (5) can be separated.

5. Process according to one of claims 1 to 4, characterised in that a threaded insert (20) with an internal thread (22) for the plug (24) is arranged in a non-rotatable and sealed manner in the socket (6), the threaded insert (20) preferably consisting of metal.

6. Process according to one of claims 1 to 5, characterised in that the socket (6) has an external thread (16) which is preferably arranged at the upper end of the socket (6).

7. Process according to one of claims 1 to 6, characterised in that ribs (7) are arranged in the transition region between the tubular body (1) and the socket (6) for stiffening.

8. Process according to one of claims 5 to 7, characterised in that a sealed region (36) is adjacent to the internal thread (22) of the threaded insert (20) in the direction of the longitudinal axis (28) of the tubular body (1), into which the front end of the plug (24) is pressed during screwing and/or cuts via its thread (26).

9. Process according to claim 8, characterised in that the threaded insert (20) has a stop face (35) for stopping the plug (24).

10. Process according to one of claims 5 to 9, characterised in that the socket (6) has a sealing surface (30) for a sealing ring (32) arranged in an annular groove of the plug (24) between its free end edge (29) and the threaded insert (20).

11. Process according to one of claims 5 to 9, characterised in that a sealing ring is arranged in an annular groove in the socket (6) between its free end edge (29) and the threaded insert (20), the plug (24) having a sealing surface towards its free end.

## Revendications

1. Procédé pour obturer et libérer une conduite tubulaire au moyen d'un dispositif comprenant un corps tubulaire (1) qui peut être assemblé à la conduite tubulaire par une première extrémité, ainsi qu'une tubulure (6) qui est réalisée sous la forme d'un composant d'une seule pièce et préfabriquée avec le corps tubulaire, et présente une surface intérieure (23) qui est communication avec l'intérieur du corps tubulaire (1),
dans lequel le dispositif est utilisé comme embout de la conduite tubulaire dans une première tranche du programme de construction, l'autre extrémité du corps tubulaire (1), qui est composée de matière plastique, étant fermée par un fond (5), cependant que la tubulure (6), également faite de matière plastique, est fermée, notamment au moyen d'un bouchon (24),
dans lequel, pour une autre tranche du programme de construction, la tubulure (6) est reliée à un appareil de pose de ballons et la conduite tubulaire est obstruée à l'aide de cet appareil cependant qu'ensuite, le fond (5) est enlevé du corps tubulaire (1),
et dans lequel, après le raccordement d'autres parties de la conduite tubulaire à l'autre extrémité du corps tubulaire (1), le dispositif est utilisé pour prolonger la conduite tubulaire au-delà de l'autre extrémité précitée, la tubulure (6) étant alors refermée.

2. Procédé selon la Revendication 1, caractérisé en ce que le corps tubulaire (1) présente à sa première extrémité un manchon d'emboîtement (3) qui est réalisé en particulier sous la forme d'un manchon d'électrosoudage et présente intérieurement un enroulement de soudage (9).

3. Procédé selon la Revendication 1 ou 2, caractérisé en ce que, jusqu'à ce qu'il soit séparé du corps tubulaire (1), le fond (5) fait partie intégrante de ce corps.

4. Procédé selon la Revendication 3, caractérisé en ce que le corps tubulaire (1) présente sur sa surface extérieure, un marquage (17) le long duquel le fond (5) peut être séparé.

5. Procédé selon une des Revendications 1 à 4, caractérisé en ce que, dans la tubulure (6), est disposé, solidairement en rotation et à joint étanche, un élément fileté rapporté (20) possédant un filetage intérieur (22) pour recevoir le bouchon (24), l'élément fileté rapporté (20) étant de préférence fait de métal.

6. Procédé selon une des Revendications 1 à 5, caractérisé en ce que la tubulure (6) présente un filetage extérieur (16) qui est disposé de préférence à l'extrémité supérieure de la tubulure (6).

7. Procédé selon une des Revendications 1 à 6, caractérisé en ce que des côtes (7) sont prévues dans la région de raccordement entre le corps tubulaire (1) et la tubulure (6) pour assurer un raidissement.

8. Procédé selon une des Revendications 5 à 7, caractérisé en ce qu'au filetage intérieur (22) de l'élément filetée rapporté (20) fait suite, en direction de l'axe longitudinal (28) du corps tubulaire (1), une zone d'étanchéité (36) dans laquelle l'extrémité avant du bouchon (24) s'enfonce lors du vissage et/ou taille son passage au moyen de son filetage (26) lors du vissage.

9. Procédé selon la Revendication 8, caractérisé en ce que l'élément fileté rapporté (20) présente une surface de butée (35) pour arrêter le bouchon (24).

10. Procédé selon une des Revendications 5 à 9, caractérisé en ce que la tubulure (6) présente, entre son bord frontal libre (29) et l'élément fileté rapporté (20), une surface d'étanchéité (30) prévue pour une bague d'étanchéité (32) est disposée dans une gorge annulaire du bouchon (24).

11. Procédé selon une des Revendications 5 à 9, caractérisé en ce qu'une bague d'étanchéité est disposée dans la tubulure (6), dans une gorge annulaire, entre le bord frontal libre (29) de cette tubulure et l'élément fileté rapporté (20), le bouchon (24) présentant une surface d'étanchéité à son extrémité libre.
